# FASCICULE DE BREVET EUROPEEN

(11) **EP 3 309 380 B1**
(45) Date de publication et mention de la délivrance du brevet: **07.08.2019**
(21) Numéro de dépôt: 17191393.2
(22) Date de dépôt: 15.09.2017
(51) Int. Cl.: F02K 1/72, B64D 29/02

(54) **NACELLE D'UN TURBORÉACTEUR COMPORTANT UN VOLET INVERSEUR**
GASTURBINENTRIEBWERKSGONDEL UMFASSEND EINE SCHUBUMKEHRKLAPPE
GAS TURBINE NACELLE COMPRISING A THRUST REVERSER FLAP

(30) Priorité: 17.10.2016 FR 1660018
(43) Date de publication de la demande: 18.04.2018
(73) Titulaire: Airbus Operations S.A.S., 31060 Toulouse (FR); Airbus (S.A.S.), 31700 Blagnac (FR)
(72) Inventeur: OBERLE, Patrick, 82600 VERDUN SUR GARONNE (FR); SURPLY, Thierry, 31700 CORNEBARRIEU (FR); BILLEROT, Vincent, 31470 FONSORBES (FR); PIARD, Frédéric, 31170 TOURNEFEUILLE (FR); JOLIVET, Nicolas, 31470 FONTENILLES (FR); OUNDJIAN, Franck, 31470 BONREPOS SUR AUSSONNELLE (FR); LETAY, Benoit, 31620 BOULOC (FR); PORTE, Alain, 31770 COLOMIERS (FR); SAUVALLE, Thomas, 31000 TOULOUSE (FR)
(74) Mandataire: Gicquel, Olivier Yves Gérard

(56) Documents cités:
- EP-A1- 0 882 882
- EP-A1- 3 051 112
- FR-A1- 2 933 144
- US-A1- 2015 176 529

## Description

### DOMAINE TECHNIQUE

La présente invention concerne une nacelle pour un turboréacteur double flux qui comporte au moins un volet inverseur, un turboréacteur double flux comportant une telle nacelle et un moteur, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur.

La nacelle comporte au moins un volet inverseur qui est mobile entre une position fermée dans laquelle il vient en continuité avec la surface extérieure de la nacelle et une position ouverte dans laquelle il ouvre une fenêtre dans la paroi de la nacelle pour expulser l'air du flux secondaire vers l'extérieur.

Le volet inverseur est monté mobile en rotation sur la structure de la nacelle de manière à passer d'une position fermée où le volet inverseur n'obture pas la veine du flux secondaire à une position ouverte où le volet inverseur obture la veine.

Ainsi en position ouverte, le volet inverseur détourne une partie du flux secondaire vers l'extérieur par la fenêtre. En position ouverte, le volet inverseur est en saillie vers l'extérieur.

Avec les turboréacteurs qui deviennent de plus en plus grands, la nacelle s'élargit et pour éviter que la partie du volet inverseur qui est en saillie entre en contact avec l'aile, il est nécessaire d'éloigner la nacelle de l'aile ce qui crée des problèmes d'encombrement.

Il est donc nécessaire de prévoir un mécanisme qui limite la sortie du volet inverseur hors de la nacelle lorsque le volet inverseur est en position ouverte. Le brevet FR-A-2 933 144 divulgue un mécanisme prévu pour répondre à ce besoin.

### EXPOSE DE L'INVENTION

Un objet de la présente invention est de proposer une nacelle comportant au moins un volet inverseur avec un mécanisme d'ouverture et de fermeture différent de celui divulgué dans le brevet susmentionné.

A cet effet, est proposée une nacelle selon la revendication 1.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant une nacelle selon l'invention,
la Fig. 2 est une vue en coupe par un plan médian de la nacelle selon l'invention en position fermée,
la Fig. 3 est une vue en coupe similaire à celle de la Fig. 2 dans une position intermédiaire, et
la Fig. 4 est une vue en coupe similaire à celle de la Fig. 2 en position ouverte.

### EXPOSE DETAILLE DE MODES DE REALISATION

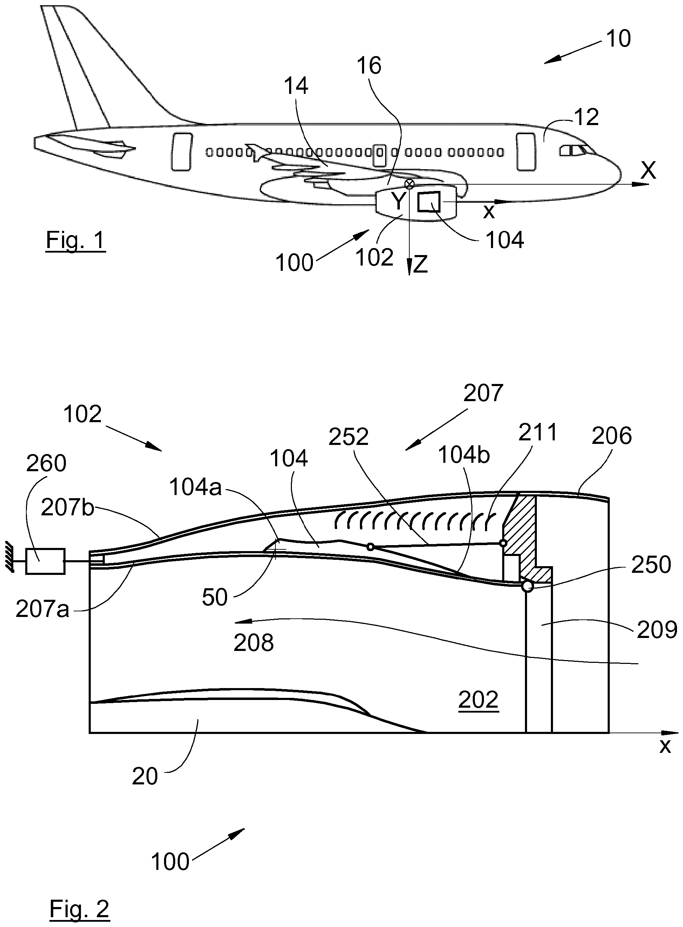

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 comporte une nacelle 102 et un moteur 20 qui est logé à l'intérieur de la nacelle 102. Comme cela est montré sur les Figs. 2 à 4, le turboréacteur double flux 100 présente une veine 202 entre la nacelle 102 et le moteur 20 et dans laquelle circule le flux secondaire 208.

Dans la description qui suit, et par convention, on appelle x l'axe longitudinal de la nacelle 102 qui est parallèle à l'axe longitudinal X de l'aéronef 10 ou axe de roulis, orienté positivement dans le sens d'avancement de l'aéronef 10, on appelle Y l'axe transversal ou axe de tangage de l'aéronef qui est horizontal lorsque l'aéronef est au sol, et Z l'axe vertical ou hauteur verticale ou axe de lacet lorsque l'aéronef est au sol, ces trois directions X, Y et Z étant orthogonales entre elles et formant un repère orthonormé ayant pour origine le centre de gravité de l'aéronef.

La nacelle 102 comporte au moins un volet inverseur 104. En particulier, il peut y avoir deux volets inverseurs 104 disposés l'un en face de l'autre, ou plusieurs, par exemple quatre, volets inverseurs 104 répartis régulièrement sur la périphérie de la nacelle 102.

Dans la description qui suit, l'invention est plus particulièrement décrite pour un volet inverseur 104, mais elle s'applique de la même manière pour chaque volet inverseur 104 lorsqu'il y en a plusieurs.

La nacelle 102 présente un capot fixe 206 qui est monté fixe sur une structure de la nacelle 102 et qui constitue une paroi extérieure de la nacelle 102.

La nacelle 102 présente, en aval du capot fixe 206 par rapport à l'axe longitudinal x, un capot mobile 207 monté mobile en translation sur la structure de la nacelle 102 selon une direction de translation globalement parallèle à l'axe longitudinal x. La translation est réalisée par tous moyens appropriés comme par exemple des glissières.

Le capot mobile 207 comporte une paroi intérieure 207a et une paroi extérieure 207b qui entoure la paroi intérieure 207a.

La nacelle 102 présente également une paroi amont 209 qui s'étend en amont de la paroi intérieure 207a par rapport à l'axe longitudinal x et qui constitue une paroi extérieure de la veine 202 autour du moteur 20. La paroi amont 209 est fixe par rapport à la structure de la nacelle 102 et se situe sensiblement au niveau du cadre avant.

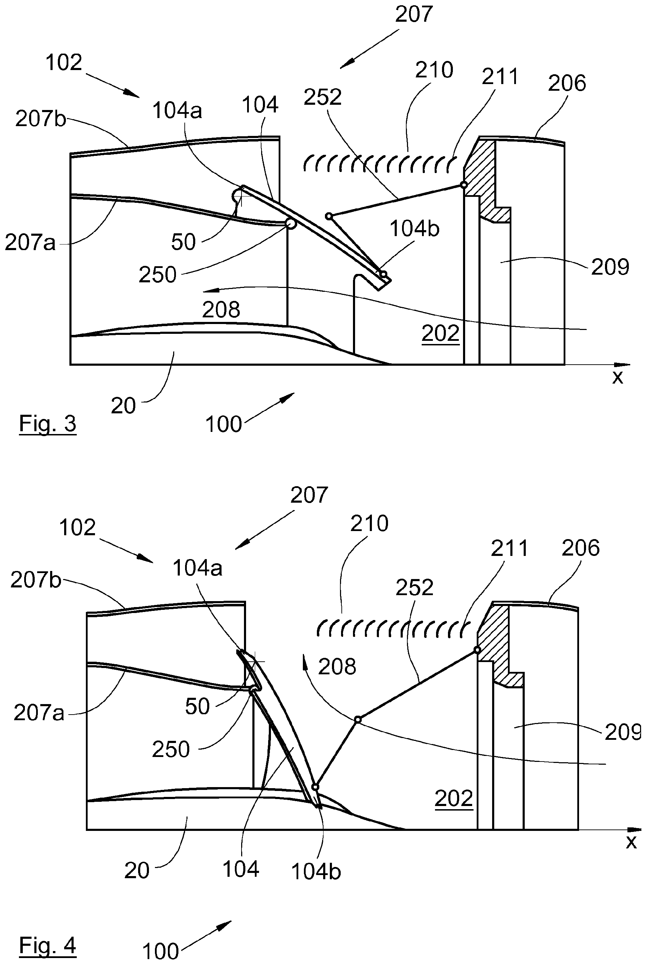

Le capot mobile 207 est mobile entre une position de fermeture (Fig. 2) dans laquelle la paroi extérieure 207b est accolée au capot fixe 206 et une position d'ouverture (Fig. 4) dans laquelle la paroi extérieure 207b est éloignée du capot fixe 206 vers l'arrière de manière à ouvrir une fenêtre 210 ouverte sur l'extérieur de la nacelle 102. En position de fermeture, le capot fixe 206 et la paroi extérieure 207b se prolongent pour former l'enveloppe extérieure de la nacelle 102 et pour obturer la fenêtre 210.

Dans le même temps, en position de fermeture, au niveau d'une extrémité amont, la paroi intérieure 207a prolonge la paroi amont 209 et constitue une paroi extérieure de la veine 202 autour du moteur 20 pour canaliser le flux secondaire 208, et en position d'ouverture, la paroi intérieure 207a est éloignée de la paroi amont 209 de manière à ouvrir le passage entre la veine 202 et la fenêtre 210.

La fenêtre 210 est ainsi délimitée en amont par le capot fixe 206 et en aval par la paroi extérieure 207b. En position d'ouverture, la fenêtre 210 est ouverte entre la veine 202 et l'extérieur de la nacelle 102. La nacelle 102 présente pour chaque volet inverseur 104, une telle fenêtre 210.

Le volet inverseur 104 est disposé entre la paroi intérieure 207a et la paroi extérieure 207b et il est donc invisible en position de fermeture (Fig. 2).

Le volet inverseur 104 est monté libre en rotation autour d'un axe de rotation 50 sur la structure de la nacelle 102 entre une position inactive (Fig. 2) dans laquelle il n'est pas dans la veine 202 (Fig. 2) et une position active (Fig. 4) dans laquelle il obture au moins en partie la veine 202. Selon un mode de réalisation particulier, l'axe de rotation 50 est agencé sur le cadre arrière de la nacelle 102.

Lorsque le capot mobile 207 est en position de fermeture, le volet inverseur 104 est en position inactive, et lorsque le capot mobile 207 est en position d'ouverture, le volet inverseur 104 est en position active de manière à dévier au moins une partie du flux secondaire 208 vers l'extérieur de la nacelle 102.

Entre la position de fermeture/inactive de la Fig. 1 et la position d'ouverture/active de la Fig. 4, le système prend différentes positions intermédiaires dont une est représentée par la Fig. 3.

Le volet inverseur 104 présente une extrémité aval 104a et une extrémité amont 104b qui se trouve en amont de l'extrémité aval 104a. L'axe de rotation 50 du volet inverseur 104 est arrangé du côté de l'extrémité aval 104a du volet inverseur 104. L'extrémité amont 104b du volet inverseur 104 repose sur la paroi intérieure 207a.

Ainsi, dans la position de fermeture/inactive (Fig. 2), la fenêtre 210 est fermée, le volet inverseur 104 repose sur la paroi intérieure 207a par son extrémité amont 104b et n'est pas dans la veine 202. Pour passer dans la position d'ouverture/active, le capot mobile 207 est alors déplacé vers sa position d'ouverture, c'est-à-dire en translation vers l'arrière, et comme le volet inverseur 104 ne se déplace pas avec le capot mobile 207, le capot mobile 207 glisse sous le volet inverseur 104 et au fur et à mesure que le capot mobile 207 se déplace, l'extrémité amont 104b du volet inverseur 104 se retrouve de plus en plus en amont par rapport à l'extrémité amont de la paroi intérieure 207a. Comme le volet inverseur 104 est en appui sur l'extrémité amont de la paroi intérieure 207a, il bascule autour de l'axe de rotation 50 pour venir dans la veine 202 jusqu'à sa position active (Fig. 4).

A l'inverse, à partir de la position d'ouverture/active, le déplacement du capot mobile 207 vers sa position de fermeture, relève le volet inverseur 104 vers sa position inactive par glissement de la paroi intérieure 207a sous le volet inverseur 104.

Un tel agencement évite que le volet inverseur 104 sorte de la nacelle 102.

Le passage de la position de fermeture à la position d'ouverture du capot mobile 207 est ainsi coordonné avec le passage de la position inactive à la position active du volet inverseur 104 et inversement.

Le capot mobile 207 est déplacé en translation par tous mécanismes d'entraînement 260 appropriés.

Le mécanisme d'entraînement est constitué par exemple d'au moins un vérin monté articulé entre le capot mobile 207 et la structure de la nacelle 102. Chaque vérin peut être électrique, hydraulique ou pneumatique ou autre.

Le mécanisme d'entraînement comporte également une unité de contrôle, du type processeur, qui commande l'allongement et le raccourcissement de chaque vérin selon les besoins de l'aéronef 10.

Pour assurer le verrouillage de la position d'ouverture du capot mobile 207, chaque vérin est équipé d'un frein, ou d'un verrou, qui est commandé par l'unité de contrôle et qui verrouille la position du vérin.

Il est également possible de prévoir que le capot mobile 207 est maintenu dans sa position d'ouverture par un jeu de verrous assurant le maintien du capot mobile 207 en position d'ouverture.

Selon un autre mode de réalisation particulier, le mécanisme d'entraînement est constitué par exemple d'au moins un système de crémaillère. Chaque crémaillère est fixée au capot mobile 207 et alignée avec la direction de translation, et, pour chaque crémaillère, le système d'entraînement comporte un pignon fixé à la structure de la nacelle 102 et mobile en rotation autour d'un axe perpendiculaire à la direction de translation pour engrener avec les dents de la crémaillère. Le mécanisme d'entraînement comporte également un moteur commandé par une unité de contrôle et agencé pour entraîner en rotation chaque pignon. La transmission de mouvement entre le moteur et chaque pignon s'effectue à travers un système de transmission qui peut comprendre des engrenages, des axes de transmissions flexibles ou autres. L'unité de contrôle est du même type que précédemment.

Le moteur peut être hydraulique ou électrique ou autre.

Pour assurer un meilleur glissement de la paroi intérieure 207a sous le volet inverseur 104, la nacelle 102 comprend un rouleau 250 monté libre en rotation autour d'un axe perpendiculaire à la direction de translation x et arrangé sur la paroi intérieure 207a au niveau de son contact avec le volet inverseur, c'est-à-dire globalement au niveau de son extrémité amont.

Pour éviter que le volet inverseur 104 se coince en position active, la nacelle 102 présente au moins un système de tringle 252 monté entre la structure de la nacelle 102, ici le cadre avant, et le volet inverseur 104. Chaque système de tringle 252 comporte deux tringles articulées entre elles, où une tringle est montée articulée sur la structure de la nacelle 102 et où l'autre tringle est montée articulée sur le volet inverseur 104. L'allongement maximal des tringles correspond à la position au-delà de laquelle le volet inverseur 104 ne peut pas aller.

La nacelle 102 peut être équipée de grilles de déviation 211, également connues sous le terme « cascades » qui sont disposées en travers de la fenêtre 210 pour améliorer l'efficacité de l'inverseur en contrôlant de manière plus précise la direction d'un flux secondaire 208 dévié.

## Revendications

1. Nacelle (102) pour un turboréacteur double flux (100) comportant un moteur (20), ladite nacelle (102) comportant :
- un capot fixe (206),
- une paroi amont (209) délimitant avec le moteur (20), une veine (202) dans laquelle circule un flux secondaire (208),
- un capot mobile (207) comportant une paroi intérieure (207a) et une paroi extérieure (207b) qui entoure la paroi intérieure (207a), ledit capot mobile (207) étant mobile en translation selon une direction de translation entre une position de fermeture, dans laquelle, d'une part, la paroi extérieure (207b) est accolée au capot fixe (206), et, d'autre part, la paroi intérieure (207a) prolonge la paroi amont (209), et une position d'ouverture dans laquelle, d'une part, la paroi extérieure (207b) est éloignée du capot fixe (206) de manière à ouvrir une fenêtre (210) ouverte sur l'extérieur de la nacelle (102), et, d'autre part, la paroi intérieure (207a) est éloignée de la paroi amont (209) de manière à ouvrir un passage entre la veine (202) et la fenêtre (210),
- au moins un volet inverseur (104), chacun étant disposé entre la paroi intérieure (207a) et la paroi extérieure (207b), présentant une extrémité aval (104a) et une extrémité amont (104b) qui se trouve en amont de l'extrémité aval (104a), et monté libre en rotation autour d'un axe de rotation (50) arrangé du côté de l'extrémité aval (104a), et où le volet inverseur (104) repose sur la paroi intérieure (207a) par son extrémité amont (104b), et
- un mécanisme d'entraînement (260) prévu pour déplacer le capot mobile (207) en translation ;
- un rouleau (250) monté libre en rotation autour d'un axe perpendiculaire à la direction de translation et arrangé sur la paroi intérieure (207a) au niveau de son contact avec le volet inverseur (104),
**caractérisée en ce que** la nacelle présente au moins un système de tringle (252) comportant deux tringles articulées entre elles, où une tringle est montée articulée sur une structure de la nacelle (102) et où l'autre tringle est montée articulée sur le volet inverseur (104).

2. Nacelle (102) selon la revendication 1, **caractérisée en ce que** le mécanisme d'entraînement (260) comporte au moins un vérin monté articulé entre le capot mobile (207) et une structure de la nacelle (102), et une unité de contrôle prévue pour commander l'allongement et le raccourcissement de chaque vérin.

3. Nacelle (102) selon la revendication 2, **caractérisée en ce que** chaque vérin est équipé d'un frein qui est commandé par l'unité de contrôle et qui verrouille la position du vérin.

4. Nacelle (102) selon la revendication 1, **caractérisée en ce que** le mécanisme d'entraînement comporte au moins un système de crémaillère, où chaque crémaillère est fixée au capot mobile (207) et alignée avec la direction de translation, pour chaque crémaillère, un pignon fixé à la structure de la nacelle (102) pour engrener avec les dents de la crémaillère, un moteur agencé pour entraîner en rotation chaque pignon, et une unité de contrôle prévue pour commander le moteur.

5. Turboréacteur double flux (100) comportant un moteur (20) et une nacelle (102) selon l'une des revendications 1 à 4 entourant le moteur (20), et où une veine (202) d'un flux secondaire (208) est délimitée entre la nacelle (102) et le moteur (20).

6. Aéronef (10) comportant au moins un turboréacteur double flux (100) selon la revendication 5.

## Patentansprüche

1. Gondel (102) für ein Zweistrom-Turbostrahltriebwerk (100), das einen Motor (20) aufweist, wobei die Gondel (102) aufweist:
- eine ortsfeste Haube (206),
- eine stromaufwärtige Wand (209), die mit dem Motor (20) einen Strömungskanal (202) begrenzt, in welchem ein Sekundärstrom (208) zirkuliert,
- eine bewegliche Haube (207), die eine innere Wand (207a) und eine äußere Wand (207b), welche die innere Wand (207a) umgibt, aufweist, wobei die bewegliche Haube (207) in einer Translationsrichtung translatorisch beweglich ist zwischen einer Schließposition, in welcher einerseits die äußere Wand (207b) an die ortsfeste Haube (206) angefügt ist und andererseits die innere Wand (207a) die stromaufwärtige Wand (209) verlängert, und einer Öffnungsposition, in welcher einerseits die äußere Wand (207b) von der ortsfesten Haube (206) entfernt ist, um so ein Fenster (210) zu öffnen, das zur Außenseite der Gondel (102) hin offen ist, und andererseits die innere Wand (207a) von der stromaufwärtigen Wand (209) entfernt ist, um so einen Durchlass zwischen dem Strömungskanal (202) und dem Fenster (210) zu öffnen,
- wenigstens eine Schubumkehrklappe (104), wobei jede zwischen der inneren Wand (207a) und der äußeren Wand (207b) angeordnet ist, ein stromabwärtiges Ende (104a) und ein stromaufwärtiges Ende (104b), das sich stromaufwärts des stromabwärtigen Endes (104a) befindet, aufweist und frei drehbar um eine Drehachse (50) gelagert ist, die auf der Seite des stromabwärtigen Endes (104a) angeordnet ist, und wobei die Schubumkehrklappe (104) mit ihrem stromaufwärtigen Ende (104b) an der inneren Wand (207a) ruht, und
- einen Antriebsmechanismus (260), der dafür vorgesehen ist, die bewegliche Haube (207) translatorisch zu bewegen;
- eine Rolle (250), die frei drehbar um eine zur Translationsrichtung senkrechte Achse gelagert ist und auf der inneren Wand (207a) im Bereich von deren Kontakt mit der Schubumkehrklappe (104) angeordnet ist,
**dadurch gekennzeichnet, dass** die Gondel wenigstens ein Gestängesystem (252) aufweist, das zwei gelenkig miteinander verbundene Stangen umfasst, wobei eine Stange gelenkig an einer Struktur der Gondel (102) angebracht ist und wobei die andere Stange gelenkig an der Schubumkehrklappe (104) angebracht ist.

2. Gondel (102) nach Anspruch 1, **dadurch gekennzeichnet, dass** der Antriebsmechanismus (260) wenigstens einen Zylinder, der gelenkig zwischen der beweglichen Haube (207) und einer Struktur der Gondel (102) angebracht ist, und eine Steuereinheit, die dafür vorgesehen ist, das Ausfahren und das Einfahren jedes Zylinders zu steuern, aufweist.

3. Gondel (102) nach Anspruch 2, **dadurch gekennzeichnet, dass** jeder Zylinder mit einer Bremse ausgestattet ist, welche von der Steuereinheit gesteuert wird und welche die Position des Zylinders verriegelt.

4. Gondel (102) nach Anspruch 1, **dadurch gekennzeichnet, dass** der Antriebsmechanismus wenigstens ein Zahnstangensystem, wobei jede Zahnstange an der beweglichen Haube (207) befestigt ist und mit der Translationsrichtung fluchtet, für jede Zahnstange ein Ritzel, das so an der Struktur der Gondel (102) befestigt ist, dass es mit den Zähnen der Zahnstange in Eingriff steht, einen Motor, der dafür ausgelegt ist, jedes Ritzel drehend anzutreiben, und eine Steuereinheit, die dafür vorgesehen ist, den Motor zu steuern, aufweist.

5. Zweistrom-Turbostrahltriebwerk (100), das einen Motor (20) und eine Gondel (102) nach einem der Ansprüche 1 bis 4, die den Motor (20) umgibt, aufweist, und wobei ein Strömungskanal (202) eines Sekundärstroms (208) zwischen der Gondel (102) und dem Motor (20) begrenzt wird.

6. Luftfahrzeug (10), welches wenigstens ein Zweistrom-Turbostrahltriebwerk (100) nach Anspruch 5 aufweist.

## Claims

1. Nacelle (102) for a turbofan engine (100) comprising a motor (20), said nacelle (102) comprising:
- a fixed cowl (206),
- an upstream wall (209) delimiting, with the motor (20), a duct (202) in which flows a bypass flow (208),
- a mobile cowl (207) comprising an inner wall (207a) and an outer wall (207b) which surrounds the inner wall (207a), said mobile cowl (207) being able to move in translation in a direction of translation between a closing position, in which, on one hand, the outer wall (207b) adjoins the fixed cowl (206), and, on the other hand, the inner wall (207a) extends the upstream wall (209), and an opening position in which, on one hand, the outer wall (207b) is remote from the fixed cowl (206) so as to open a window (210) that is opened on the exterior of the nacelle (102), and, on the other hand, the inner wall (207a) is remote from the upstream wall (209) so as to open a passage between the duct (202) and the window (210),
- at least one reverser flap (104), each one being arranged between the inner wall (207a) and the outer wall (207b), having a downstream end (104a) and an upstream end (104b) that is located upstream of the downstream end (104a), and being mounted so as to be free in rotation about a rotation axis (50) arranged on the side of the downstream end (104a), and where the reverser flap (104) rests on the inner wall (207a) by means of its upstream end (104b), and
- a drive mechanism (260) that is intended to move the mobile cowl (207) in translation;
- a roller (250) that is mounted so as to be free in rotation about an axis perpendicular to the direction of translation and is arranged on the inner wall (207a) at its contact with the reverser flap (104),
**characterized in that** the nacelle has at least one rod system (252) comprising 2 rods that are articulated to one another, where one rod is mounted articulated on a structure of the nacelle (102) and where the other rod is mounted articulated on the reverser flap (104).

2. Nacelle (102) according to Claim 1, **characterized in that** the drive mechanism (260) comprises at least one actuator mounted articulated between the mobile cowl (207) and a structure of the nacelle (102), and a control unit intended for controlling the extension and contraction of each actuator.

3. Nacelle (102) according to Claim 2, **characterized in that** each actuator is equipped with a brake which is controlled by the control unit and which locks the position of the actuator.

4. Nacelle (102) according to Claim 1, **characterized in that** the drive mechanism comprises at least one rack system, where each rack is attached to the mobile cowl (207) and is aligned with the direction of translation, for each rack a pinion attached to the structure of the nacelle (102) to mesh with the teeth of the rack, a motor arranged so as to drive in rotation each pinion, and a control unit intended for controlling the motor.

5. Turbofan engine (100) comprising a motor (20) and a nacelle (102) according to one of Claims 1 to 4 surrounding the motor (20), and where a duct (202) for a bypass flow (208) is defined between the nacelle (102) and the motor (20).

6. Aircraft (10) comprising at least one turbofan engine (100) according to Claim 5.
